# EUROPÄISCHE PATENTSCHRIFT

(11) **EP 2 652 716 B1**
(45) Veröffentlichungstag und Bekanntmachung des Hinweises auf die Patenterteilung: **11.01.2017**
(21) Anmeldenummer: 11788055.9
(22) Anmeldetag: 21.11.2011
(51) Int. Cl.: G06F 11/34, G07C 3/08, G05B 23/02, G07C 5/08

(54) **VERFAHREN ZUR AUTOMATISCHEN ÜBERWACHUNG ZUMINDEST EINER KOMPONENTE EINES PHYSIKALISCHEN SYSTEMS**
METHOD FOR AUTOMATICALLY MONITORING AT LEAST ONE COMPONENT OF A PHYSICAL SYSTEM
PROCÉDÉ DE SURVEILLANCE AUTOMATIQUE D'AU MOINS UN COMPOSANT D'UN SYSTÈME PHYSIQUE

(30) Priorität: 17.12.2010 DE 102010054876
(43) Veröffentlichungstag der Anmeldung: 23.10.2013
(73) Patentinhaber: Rolls-Royce Deutschland Ltd & Co KG, 15827 Blankenfelde-Mahlow (DE)
(72) Erfinder: HAINZL, Stefan, 14195 Berlin (DE)
(74) Vertreter: Hoefer & Partner Patentanwälte mbB
(86) Internationale Anmeldenummer: PCT/EP2011/005856
(87) Internationale Veröffentlichungsnummer: WO 2012/079685

(56) Entgegenhaltungen:
- EP-A1- 1 455 313
- EP-A2- 2 063 399
- US-B1- 6 766 230
- QIAO SUN: "Sensor fusion for vehicle health monitoring and degradation detection", INFORMATION FUSION, 2002. PROCEEDINGS OF THE FIFTH INTERNATIONAL CONFE RENCE ON JULY 8-11, 2002, PISCATAWAY, NJ, USA,IEEE, Bd. 2, 8. Juli 2002 (2002-07-08), Seiten 1422-1427, XP010594360, ISBN: 978-0-9721844-1-0

## Beschreibung

Die aus dem Stand der Technik bekannten automatischen Überwachungsverfahren betrachten nur die Algorithmen, mittels derer in unstrukturierter Weise eine Vielzahl von Signalen bearbeitet werden. Hierbei werden hauptsächlich nur statistische Methoden herangezogen, um die Zusammenhänge zwischen Einzelkomponenten darzustellen.

Aus der EP 2 063 399 A2 ist ein Verfahren zur Überwachung eines Fahrzeugs bekannt. Obwohl hierbei das Gesamtsystem in Untersysteme unterteilt wird, wird dabei nicht eine Kausalität in dem System auf der Basis einer Unterteilung des physikalischen Systems betrachtet. Vielmehr erfolgt für jedes Untersystem eine parallele, auf Algorithmen gestützte Überwachung.

Als nachteilig bei den aus dem Stand der Technik bekannten Vorgehensweisen erweist es sich, dass eine Fehler-Kausalität des gesamten Systems nicht berücksichtigt wird.

Ein weiterer Nachteil der vorbekannten Verfahren liegt darin, dass sie nicht ausreichend die Schwierigkeiten realer Systeme berücksichtigen können, bei welchen beispielsweise ein Fehler zwischen einem physikalischen Sensor und dem System auftritt. Dabei werden nur zwei Zustände berücksichtigt, nämlich eine vollständige Funktion oder ein vollständiger Ausfall, was wiederum zu einer fehlerhaften Überwachung des Gesamtsystems führt. Vielmehr umfassen reale Systeme eine Vielzahl von Sensoren zur Messung eines Parameters des Systems, wodurch die Qualität der Überwachung durch Ausnutzung der Redundanz verbessert werden könnte.

Aus der EP 1 455 313 A1 ist ein Verfahren vorbekannt, um Betriebszustände eines Flugzeugs zu überwachen. Dabei werden von Sensoren oder Überwachungssystemen bereitgestellte Daten verknüpft, wobei eine Diagnose und Prognose erstellt wird. Dabei werden Interaktionen zwischen individuellen komplexen Systemkomponenten bei der Analyse betrachtet. Bei dem Verfahren beziehen Sensoren aktuelle oder vorhergesagte Antworten von Informationsquellen. Diese Informationen werden dann klassifiziert und einzelnen Baugruppen zugeordnet, wobei die zugrundeliegenden Quellen physikalische Fehlermodelle, ein angelerntes Flugzeugverhalten, Expertenkenntnisse und Designdaten des Systems berücksichtigen. Nachfolgend werden diese Daten verarbeitet, um die Resultate von reinen Informationen auf physikalische Modelle zu übertragen.

Der Erfindung liegt die Aufgabe zugrunde, ein Verfahren zur automatischen Überwachung zumindest einer Komponente eines physikalischen Systems zu schaffen, welches auch bei einem komplexen System eine zuverlässige automatische Fehlerabschätzung ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß gibt bei dem Verfahren zumindest ein Sensor einer zu überwachenden Komponente über eine Messkette ein elektrisches Signal ab, welches gelesen und verarbeitet wird und als Datei in einem Datensatz gespeichert wird. Nachfolgend werden (in einem ersten Überprüfungsschritt) die Daten des Datensatzes nach Fehlern überprüft, welche durch die vorangegangene Datenverarbeitung verursacht sein können. Somit wird in automatischer Weise nach Fehlern gesucht, welche durch die Datenverarbeitung der Messkette verursacht sind, nicht jedoch durch zum Beispiel den Sensor selbst.

In einem nachfolgenden (zweiten) Überprüfungsschritt werden erfindungsgemäß die Daten des Datensatzes in den physikalischen Kontext des zumindest einen Sensors gebracht und auf Fehler überprüft, die sich durch Verletzungen der Annahmen der physikalischen und/oder systembedingten Gegebenheiten der Elemente der Messkette ergeben können. Es erfolgt somit eine Fehlersuche in dem physikalischen System innerhalb der Messkette.

In einem (optionalen, zwischengeschalteten) Überprüfungsschritt werden die als äquivalent eingestuften Sensoren, sofern im zu überwachenden System vorhanden, untereinander verglichen. Daraus ergeben sich weitere Hinweise auf sich fehlverhaltende Sensoren.

Nachfolgend werden (in einem dritten Überprüfungsschritt) die Daten des Datensatzes in den Kontext der Komponente selbst gebracht und auf Fehler überprüft, die sich aus Verletzungen der physikalischen und/oder systembedingten Gegebenheiten der Komponente ergeben können. Somit wird, nachdem in dem ersten Überprüfungsschritt nach Fehlern der Datenverarbeitung und in dem zweiten Überprüfungsschritt nach Fehlern der Elemente der Messkette gesucht wurde, in dem dritten Überprüfungsschritt nach Fehlern der Komponente selbst gesucht.

Erfindungsgemäß erfolgt somit eine Unterteilung des Gesamtsystems, welche alle physikalischen Einheiten und deren Beziehungen untereinander betrachtet. Die vorliegende Erfindung ist somit auf jedes komplexe physikalische System anwendbar.

Der objektbasierten Überprüfung nachfolgend werden erfindungsgemäß die individuell behaupteten (aufgefundenen) Fehler in einer Rückkoppelung gegeneinander geprüft, Die Fehler (Fehlermeldungen) werden in Folge der Überprüfung entweder zurückgewiesen oder als eine Fehlermeldung mit Bezug auf die Fehlerquelle einem menschlichen Betreiber des physikalischen Systems ausgegeben.

Erfindungsgemäß wird somit in einer Gesamtarchitektur des Überwachungssystems auf der Tatsache abgestellt, dass jeder Fehler Ursachen und Wirkungen hat. Diese Wirkungen zeigen sich nicht notwendigerweise an derselben Stelle wie die Ursache, können jedoch Symptome in entfernten, abhängigen Untersystemen hervorrufen. Diese Symptome können in zusätzlichen Fehlern resultieren und erschweren somit eine Isolation des Fehlers. Die oben beschriebene Rückkoppelung wird somit als integraler Bestandteil des Überwachungssystems und Überwachungsverfahrens angesehen.

Erfindungsgemäß werden somit fehlerhafte Einheiten, oder ganz allgemein Daten innerhalb des kausalen Systems gesucht. Somit erhalten erfindungsgemäß abhängige, nachgeordnete Einheiten nur vertrauenswürdige Informationen und können in ihrem eigenen Überwachungssystem den Zustand von vorgeschalteten Einheiten berücksichtigen. Somit werden erfindungsgemäß die Nachteile, die sich bei den aus dem Stand der Technik bekannten Überwachungssystemen ergeben, vermieden oder vermindert.

Weiterhin wirkt das erfindungsgemäße Verfahren als Beschleuniger für Fehlerermittlungs- und Isolationsalgorithmen, da die große Problemstellung der Überwachung eines komplexen Systems in kleinere Teilprobleme unterteilt ist.

Im Folgenden wird die Erfindung anhand eines Ausführungsbeispiels in Verbindung mit der Zeichnung beschrieben. Dabei zeigt:
- Fig. 1: eine schematische Darstellung des Aufbaues eines zu überwachenden physikalischen Systems,
- Fig. 2: eine Darstellung des Aufbaues des Modells der in Fig. 1 gezeigten Anordnung,
- Fig. 3: ein Beispiel eines Fehlers in der Datenausgabe,
- Fig. 4: eine Darstellung eines Aussetzers in einer Messung,
- Fig. 5: eine Darstellung einer modell-basierten Fehlererkennung im Vergleich, und
- Fig. 6: eine schematische Darstellung der Objekte und der zugeordneten Überprüfung.

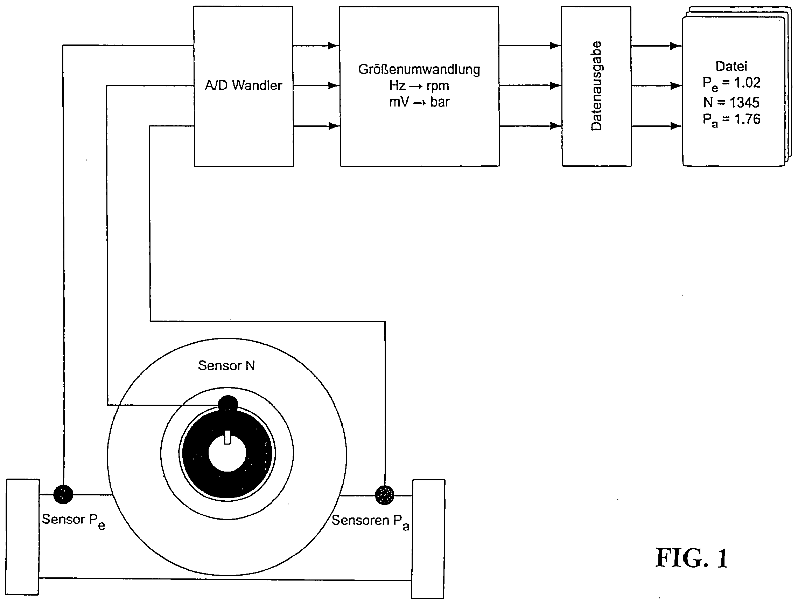

Die Fig. 1 zeigt in schematischer, vereinfachter Darstellung ein physikalisches System anhand einer Pumpe. Diese umfasst beispielsweise einen Sensor N für die Drehzahl, einen Sensor Pe für den Eingangsdruck sowie mehrere Sensoren Pa für den Ausgangsdruck. Die Signale der Sensoren werden über einen Analog/Digital-Wandler umgewandelt. Nachfolgend erfolgt eine Größenumwandlung, um beispielsweise Schwingungssignale des Sensors N in einen Drehzahlwert umzuwandeln oder um Spannungswerte der Sensoren Pe und Pa in Druckwerte umzuwandeln. Nachfolgend erfolgt eine Datenausgabe sowie eine Speicherung der jeweiligen Daten in einer Datei.

Bei dem in Fig. 1 gezeigten Aufbau stellt der Sensor Pa eine Sensoranordnung mit drei Sensoren dar, die zueinander äquivalent sind.

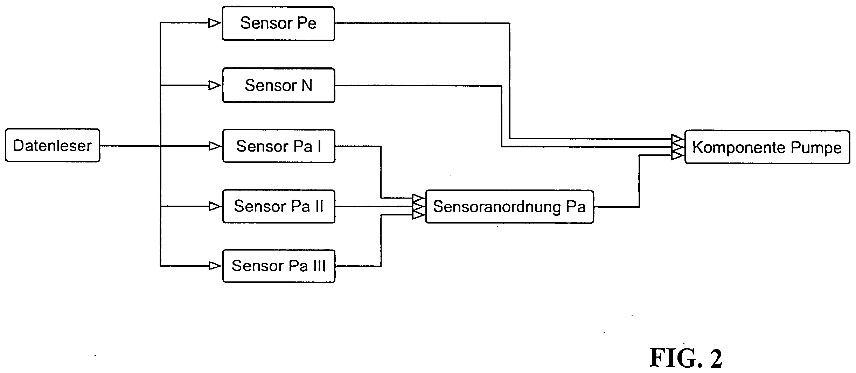

Nachfolgend wird anhand der Fig. 2 die Modellbildung dargestellt:

Das erfindungsgemäße Überwachungssystem, welches eine Abbildung des physikalischen Systems darstellt, besteht aus folgenden Elementen:
- einem Datenleser, welcher die Daten aus dem ausgebenden System entgegennimmt;
- Sensoren, nämlich einem Sensor Pe, einem Sensor N sowie dreier Sensoren Pa;
- einer Sensoranordnung, welche die drei Sensoren Pa als Eingang nutzt;
- einer Komponente, welche die Pumpe widerspiegelt.

Jedes der Objekte ist mit Algorithmen ausgestattet, die einerseits abgeleitete Werte aus den Eingangswerten zur Verfügung stellt und andererseits die Validität der Eingangswerte überprüft.

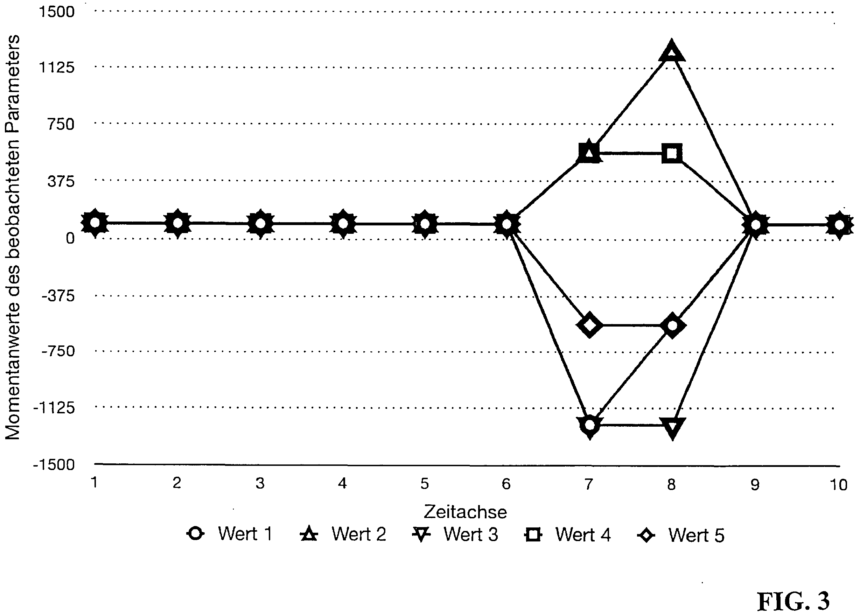

Im Folgenden wird anhand der Fig. 3 eine Fehlererkennung durch den Datenleser dargestellt.

Im Datenleser (siehe Fig. 2) wurde den Werten noch keinerlei Kontext zugeordnet. Es handelt sich also nur um Werte als solche, denen allerdings die Verarbeitung durch das physische Datenausgabesystem gemein ist.

Die Fig. 3 zeigt einen möglichen Fehlerfall, bei dem das Datenausgabesystem für einen Moment unsinnige Werte in die Datei schreibt. Dies kann durch verschiedene Ursachen begründet sein, wie z.B. einen Übertragungsfehler zwischen einem Prüfstand und einer über ein Netzwerk verbundenen Festplatte. Dieser Fehler kann beispielsweise durch die plötzliche Änderung aller Eingangswerte erkannt werden. Die Fig. 3 zeigt, dass es im Vergleich zu den vorangegangenen Eingangswerten auffällig ist, dass für einen bestimmten Zeitraum sehr unterschiedliche Werte auftreten, während nachfolgend wieder die vorangegangenen gleichen Werte vorliegen (die Abszisse zeigt die Zeitachse). Weitere Fehler können fehlerhafte Zeitskalen oder grobe Unstetigkeiten sein.

Die Relevanz der Erkennung dieser Art Fehler begründet sich in deren Weiterverwendung. Ein darauf folgendes Sensor-Objekt könnte diese Werte übernehmen und daraus falsche Werte für die Überwachungsalgorithmen der wiederum darauf folgenden Komponente liefern.

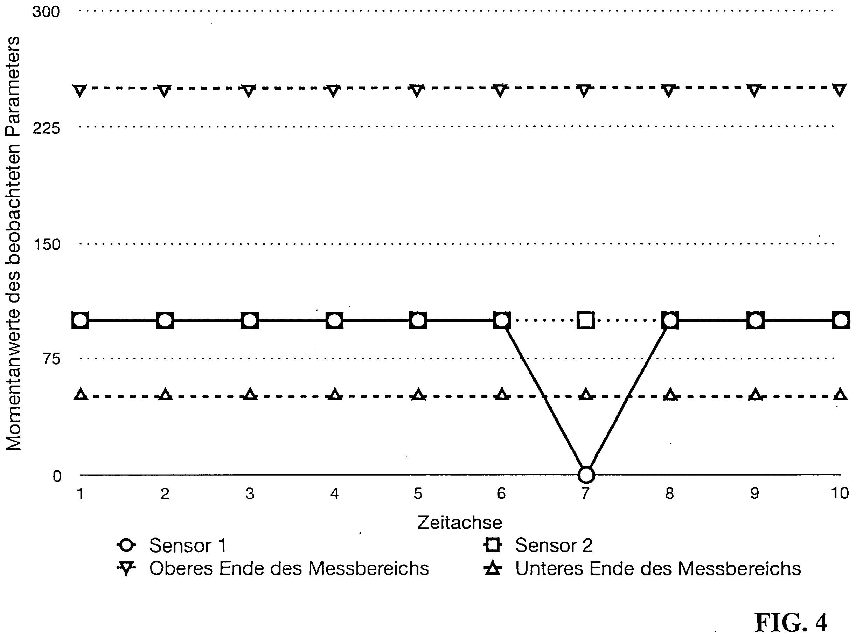

Anhand der Fig. 4 werden Aussetzer in der Messung im Zusammenhang mit den Sensoren erläutert.

Sensoren sind physikalische Objekte, deren Kontext den Modellsensoren zugewiesen wird. Der Kontext besteht in diesem Fall z.B. im Messbereich. Folglich kann bereits diese Information zur Fehlererkennung auf der Ebene des Sensors verwendet werden.

Im Hinblick auf die Darstellung in Fig. 4 wird wiederum die Wichtigkeit der vorgelaufenen Validierung sichtbar. Wurde bereits im Datenleser-Objekt erkannt, dass die Werte sinnlos sind, so kann per Definition kein Fehler am Sensor erkannt werden. Eine Einstufung als "fehlerhaft" aus falschen Gründen ist somit nicht möglich.

Ein weiteres Beispiel für einen tatsächlichen Fehler des Sensors wären beispielsweise instabile elektrische Verbindungen, durch die es zu Aussetzern kommt. Ein derartiger Vorgang ist beispielhaft in Fig. 4 dargestellt. Die Annahme, dass kein Fehler in der Datenausgabe besteht, gilt hier natürlich ebenfalls (siehe symbolisch Sensor 2). Derartige Fehler können beispielsweise über sehr steile, physikalisch nicht begründbare Flanken erkannt werden.

Nachfolgend wird auf die Sensoranordnung eingegangen:

Besteht Redundanz an einer physikalischen Position (wie im Beispiel Pa im Hinblick auf drei äquivalente, parallel zueinander vorgesehene Sensoren), so kann dies zur Fehlererkennung benutzt werden. Beispielsweise könnte einer der Sensoren aus der Messgruppe Messwerte mit falschen Vorzeichen liefern, ohne dabei seinen Messbereich zu verlassen. Ob dieser Fehler durch einen falschen physikalischen Anschluss des Sensors (falsche Polung), aus der A/D-Wandlung oder einer Größenumwandlung besteht, lässt sich dabei nur schwer bestimmen. Entscheidend ist aber die Eingrenzung des Problems als solches.

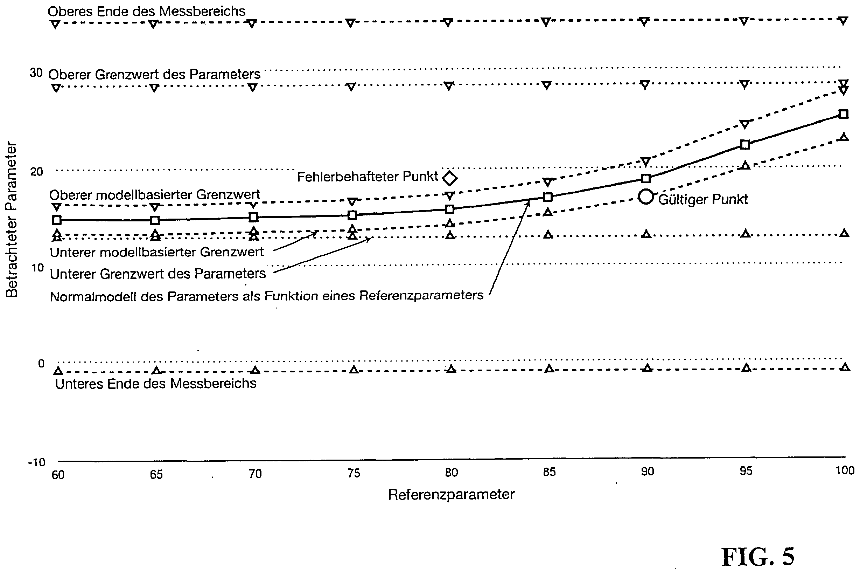

Im Folgenden wird in Verbindung mit Fig. 5 auf die Komponente eingegangen.

Sind Sensoren noch relativ einfache Systeme, so sind die Objekte "Komponente" zur Darstellung komplexer Systeme oder Systemgruppen vorgesehen.

Die Fehlererkennung kann dabei sehr einfach sein. Z.B. können Extremwerte eines Parameters im Normalzustand festgelegt und als Fehlerschwellenwert definiert werden. Dies ist in Fig. 5 als "Oberer und unterer Grenzwert des Parameters" dargestellt. Üblicherweise müssen diese Schwellenwerte oder Grenzwerte vollkommen innerhalb des Messbereichs der aufnehmenden Sensoren liegen, wodurch eine einfache Zuordnung möglich ist.

Diese grobe Herangehensweise kann durch modellbasierte Eingrenzung der Normalwerte für den jeweiligen Betriebszustand eingegrenzt werden. Diese Modelle können auch adaptiv ausgelegt werden, was vor allem bei lange laufenden, der Abnutzung ausgesetzten Systemen sinnvoll erscheint.

An dieser Stelle ergeben sich besonders deutlich die erfindungsgemäß vorliegenden Vorteile der sequentiellen Fehlererkennung. Im Laufe der Adaptation würden fehlerhafte Eingangswerte das adaptierte Modell verzerren.

Ein weiteres Beispiel für die erfindungsgemäße Vorgehensweise ist die Erkennung an Signaturen. Eine abgebrochene Schaufel in der Pumpe kann, je nach Regelung der Drehzahl, zu einer Erhöhung der Drehzahl bei gleichzeitiger Verringerung des Drucks Pa führen. Diese Änderung kann sich noch innerhalb der oben dargestellten Modelltoleranzen abspielen, wenn diese aus Gründen der Robustheit relativ groß gewählt wurden.

Wiederum kann hier die erfindungsgemäße sequentielle Fehlererkennung das Ergebnis untermauern. Würde die Sensoranordnung Pa erkennen, dass nur einer der Sensoren ausschlägt, würde es dessen Status als fehlerhaft einstufen. Somit bliebe nur die Drehzahlerhöhung übrig, die aber auch gewollte Gründe haben könnte. Die Entscheidung darüber obliegt dann der letzten Stufe der erfindungsgemäßen automatischen Überwachung (der Überprüfung, siehe nächster Abschnitt), zunächst wäre aber eine Fehlererkennung abgewendet. Weitere Beispiele für hier zu erkennende Fehler sind Parameterdrifts oder Messbereichsverzerrungen.

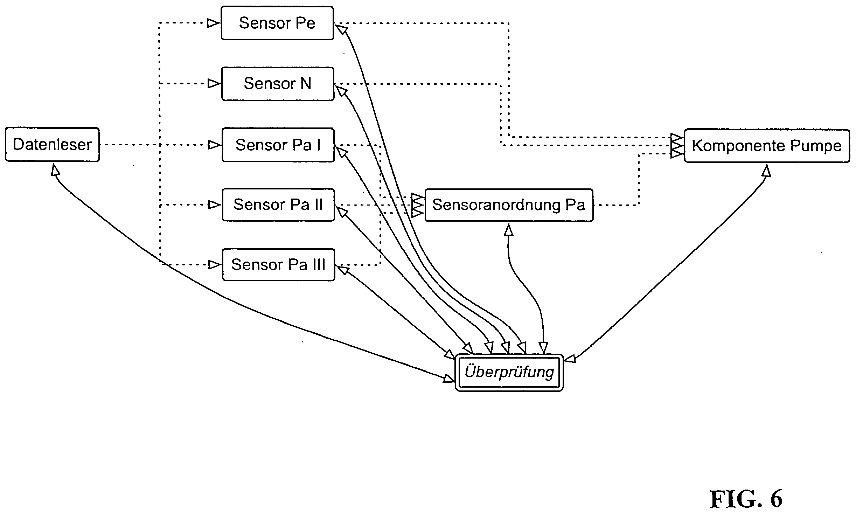

Nachfolgend wird in Verbindung mit Fig. 6 die Rückkopplung beschrieben.

Im Ablauf der oben beschriebenen automatischen Überwachung endet im Prinzip die Evaluierung der physisch vorhandenen Elemente des überwachten Systems. Ein wichtiger erfindungsgemäßer Aspekt ist dabei die fortschreitende Verbesserung der Validierung der Daten von der Datenausgabe weg zur Komponente, welche durch die sequentielle Art der Fehlererkennung ermöglicht wird. Damit stützen sich Suchalgorithmen des jeweils nachfolgenden Objekts auf bereits validierte Daten. Hieraus resultieren vertrauenswürdigere Ergebnisse.

Trotzdem ist es hinsichtlich des erfindungsgemäßen automatischen Überwachungsverfahrens notwendig, alle erkannten Fehler nochmals zu evaluieren.

Gäbe es z.B. innerhalb des Objekts "Komponente Pumpe" eine Überwachung des Frequenzbildes in der Druckmessung, so würde diese genau an dem einen, durch den Vergleich innerhalb der Sensoranordnung eigentlich als invalide gekennzeichneten Sensor, diese Änderung in Form eines zusätzlichen Ausschlags für die Frequenz der Pumpe feststellen.

Die Rückkopplung, dargestellt durch das Objekt "Überprüfung" (siehe Fig. 6), ist dazu ausgelegt, die Entscheidung zu treffen, ob einem untergeordneten Objekt vollkommen zu misstrauen und somit aus allen Betrachtungen auszuschließen ist. Folglich ergibt sich umgekehrt die Möglichkeit, Änderungen, beispielsweise die Frequenzbildänderung bei der oben diskutierten Pumpenfrequenz, zu berücksichtigen und damit den wahren Fehler zu erkennen.

Die Rückkoppelung bildet somit das Zentrum für die gesamte Überwachung. Hier werden alle Informationen zusammengetragen und anhand eines geeigneten Sets von Algorithmen überprüft. Diese Algorithmen berücksichtigen die Informationen und Daten und priorisieren diese untereinander. Somit kann beispielsweise eine Fehlernachricht unberücksichtigt bleiben, wenn die "Überprüfung" feststellt, dass dieser Fehler nur das Resultat eines anderen Fehlers ist.

Wie sich aus oben stehenden Erläuterungen ergibt, ist erfindungsgemäß somit eine zweigliedrige Verschaltung der Algorithmen vorgesehen, nämlich erstens in der Sequenz der Objekte und zweitens durch die übergeordnete "Überprüfung". Hieraus ergibt sich erfindungsgemäß weiterhin die Möglichkeit, einfachere und übersichtlichere Algorithmen zu benutzen. Hierdurch wird einerseits weniger Rechenleistung benötigt, andererseits wird die Fehleranfälligkeit der Algorithmen selbst reduziert.

Erfindungsgemäß erfolgt somit ein Übergang von dem physikalischen, zu überwachenden System zu dem reinen Überwachungssystem, und nachfolgend im Überwachungssystem eine Rückführung auf das physikalische System.

Es ist weiterhin darauf hinzuweisen, dass der Nutzer des erfindungsgemäßen Verfahrens zur automatischen Überwachung nicht notwendigerweise derjenige ist, der das zu überwachende System bedient oder direkt benutzt. Das Verfahren zur automatischen Überwachung kann vielmehr bei komplexen Systemen an geeigneter Stelle eingesetzt werden.

Weiterhin besteht erfindungsgemäß die Möglichkeit, dass der Nutzer oder menschliche Betreiber des physikalischen Systems mit dem das Verfahren durchführenden Computerprogramm interaktiv zusammenarbeitet, um beispielsweise die Strukturen zu ändern, auf automatische Nachrichten zu reagieren und Daten, die durch die Algorithmen erzeugt wurden, für eine manuelle Analyse zu extrahieren. Ein zugrundeliegendes Computerprogramm kann weiterhin die Möglichkeit bieten, die ermittelten Daten zur späteren Auswertung und/oder Verwendung automatisch zu speichern.

Weiterhin ergibt sich bei der "Überprüfung" die Möglichkeit, die Ergebnisse zu speichern und dabei die aufgetretenen Fehlermeldungen zu berücksichtigen und zu bewerten. Dabei können automatisch Fehlerhäufigkeiten sowie deren Beseitigung berücksichtigt werden, wenn derartige Fehler wiederholt auftreten.

## Patentansprüche

1. Verfahren zur automatischen Überwachung zumindest einer Komponente eines physikalischen Systems,
- bei welchem zumindest ein Sensor der Komponente über eine Messkette ein elektrisches Signal abgibt, welches gelesen und verarbeitet und als Daten in einem Datensatz in einer Datei gespeichert wird,
- bei welchem nachfolgend in einem ersten Überprüfungsschritt die Daten des Datensatzes nach Fehlern überprüft werden, welche durch eine vorangegangene Datenverarbeitung verursacht sein können,
- bei welchem nachfolgend in einem zweiten Überprüfungsschritt die Daten des Datensatzes in den physikalischen Kontext des zumindest einen Sensors gebracht und auf Fehler überprüft werden, die sich durch Verletzungen der Annahme der physikalischen und/oder systembedingten Gegebenheiten der Elemente der Messkette ergeben können,
- bei welchem nachfolgend in einem dritten Überprüfungsschritt die Daten des Datensatzes in den Kontext der Komponente gebracht und auf Fehler überprüft werden, die sich aus Verletzungen der physikalischen und/oder systembedingten Gegebenheiten der Komponente ergeben können, und
- bei welchem anschließend in einem vierten Überprüfungsschritt die individuell behaupteten Fehler gegeneinander geprüft und entweder zurückgewiesen oder als eine Fehlermeldung mit Bezug auf die Fehlerquelle ausgegeben werden.

2. Verfahren nach Anspruch 1, bei welchem nach dem zweiten Überprüfungsschritt in einem weiteren Überprüfungsschritt bei vorhandener Pluralität von Sensoren, wenn diese Sensoren systembedingt äquivalent sind, die Daten des Datensatzes im Kontext seiner äquivalenten Nachbarn nach Fehlern überprüft werden, die sich aus Verletzungen von Gegebenheiten der Ähnlichkeit und/oder Abhängigkeit ergeben können.

3. Verfahren nach Anspruch 1 oder 2, **dadurch gekennzeichnet, dass** die schrittweise ermittelten Daten automatisch gespeichert werden.

4. Verfahren nach einem der Ansprüche 1 bis 3, **dadurch gekennzeichnet, dass** die Ausgabe der Fehlermeldung zumindest eine automatische Erstellung eines Vorschlags zur Fehlererkennung und/oder Fehlerbeseitigung umfasst.

## Claims

1. Method for automatic monitoring of at least one component of a physical system,
- where at least one sensor of the component emits an electrical signal via a measurement chain, which signal is read and processed and then saved as data of a file in a data record,
- where subsequently in a first checking step the data of the data record is checked for errors that might be caused by a preceding data processing,
- where subsequently in a second checking step the data of the data record is placed in the physical context of the at least one sensor and checked for errors that might result from infringements of the assumption of the physical and/ or system-related factors in the elements of the measurement chain,
- where subsequently in a third checking step the data of the data record is placed in the context of the component and checked for errors that might result from infringements of the physical and/ or system-related factors of the component, and
- where subsequently in a fourth checking step the individually asserted errors are checked against one another and are either rejected or output as an error message with reference to the error source.

2. Method in accordance with Claim 1, where after the second checking step in a further checking step - in the event of a plurality of sensors, if these sensors are equivalent due to the system - the data of the data record is checked for errors in the context of its equivalent neighbours, which errors might result from infringements of the factors of similarity and/ or dependency.

3. Method in accordance with Claim 1 or 2, **characterized in that** the data ascertained step by step are automatically stored.

4. Method in accordance with one of the Claims 1 to 3, **characterized in that** the output of the error message includes at least one automatic generation of a proposal for error detection and/ or error elimination.

## Revendications

1. Procédé de surveillance automatique d'au moins un composant d'un système physique,
- dans lequel au moins un capteur du composant émet via une chaîne de mesure un signal électrique qui est lu et traité puis enregistré sous forme de données d'un jeu de données dans un fichier,
- dans lequel ensuite dans une première étape de contrôle, les données du jeu de données sont examinées pour y déceler des erreurs qui peuvent avoir été causées par un traitement antérieur des données,
- dans lequel ensuite dans une deuxième étape de contrôle, les données du jeu de données sont placées dans le contexte physique de l'au moins un capteur et examinées pour y déceler des erreurs qui peuvent résulter de violations de l'hypothèse portant sur les conditions physiques et/ ou systémiques des éléments de la chaîne de mesure,
- dans lequel ensuite dans une troisième étape de contrôle, les données du jeu de données sont placées dans le contexte du composant et examinées pour y déceler des erreurs qui peuvent résulter de violations des conditions physiques et/ ou systémiques du composant et,
- dans lequel enfin dans une quatrième étape de contrôle, les erreurs individuelles supposées sont examinées les unes par rapport aux autres et sont soit rejetées, soit sorties sous forme de message d'erreur faisant référence à la source d'erreurs.

2. Procédé selon la revendication n° 1, dans lequel, après la deuxième étape de contrôle, dans une étape de contrôle supplémentaire en présence d'une pluralité de capteurs, lorsque ces capteurs sont systémiquement équivalents, les données du jeu de données sont examinées dans le contexte de ses voisins équivalents pour y déceler des erreurs qui peuvent résulter de violations de conditions de similitude et/ ou de dépendance.

3. Procédé selon la revendication n° 1 ou n° 2, **caractérisé en ce que** les données déterminées par étapes sont automatiquement enregistrées.

4. Procédé selon une des revendications n° 1 à n° 3, **caractérisé en ce que** la sortie du message d'erreur comprend au moins une création automatique d'une proposition de détection d'erreurs et/ ou de suppression d'erreurs.
